# EUROPEAN PATENT SPECIFICATION

(11) **EP 2 689 810 B1**
(45) Date of publication and mention of the grant of the patent: **27.06.2018**
(21) Application number: 13167115.8
(22) Date of filing: 08.05.2013
(51) Int. Cl.: A63B 21/062, G01L 5/00, A63B 71/06, A63B 21/00, A63B 23/02, A63B 24/00, G01G 23/00

(54) **Weight trainer with load detection system**
Krafttraining mit Lasterkennungssystem
Entraîneur poids maître avec système de détection de charge

(30) Priority: 26.07.2012 TW 101127053
(43) Date of publication of application: 29.01.2014
(73) Proprietor: Joong Chenn Industry Co., Ltd., Nantou City, Nantou County 540 (TW)
(72) Inventor: Chen, James, Nantou City, Nantou County 540 (TW)
(74) Representative: Becker Kurig Straus

(56) References cited:
- EP-A1- 0 691 140
- WO-A1-2005/030341
- GB-A- 2 477 609
- US-A1- 2010 197 462
- US-B1- 6 494 811

## Description

### BACKGROUND OF THE INVENTION

### 1. Field of the Invention

The present invention relates to fitness equipment, and more particularly, to a weight trainer with a load detection system.

### 2. Description of Related Art

At present, fitness equipment is in wide use, whereas a weight trainer is the commonest required fitness equipment of sports and fitness exercise.

A typical weight trainer, for example as the one disclosed in US2012/01976462, has a weight allocating device and at least a transmission device connected to the weight allocating device. The weight allocating device has a plurality of selection tabs adjustable by a user according to the weight required for muscle training and therefore capable of providing an appropriate weight load. However, the weight trainer has a fixed training goal and effect, but is not capable of counting or calculating calorie consumption during fitness exercise. To evaluate the sports and fitness exercise taken by them, users have to record or read related fitness exercise data to the detriment of efficient promotion of fitness exercise.

Hence, as shown in FIG. 10, Taiwan Published Patent Application 201034715 discloses a fitness equipment that comprises a reed switch 94 disposed on a frame 92 of a weight trainer 90 and adapted to quantify fitness exercise-related data, wherein a magnetic material is coated on selection tabs 96. Once a user pulls the selection tabs 96, the reed switch 94 will identify the user's fitness exercise condition according to a detected magnetic change. However, the aforesaid magnetic sensing method fails to ensure the maintenance of consistency in the distance between the reed switch 94 and the selection tabs 96 due to a production tolerance of the selection tabs 96. Furthermore, a load device 98 of the weight trainer 90 is erected on the floor and thus is unlikely to maintain an angle required for parallel arrangement of the load device 98 and the reed switch 94. In addition, an error of the position of a fall of the selection tabs 96 is likely to cause the reed switch 94 to make a wrong judgment. Accordingly, the detection status of the structure is relatively unstable.

In conclusion, the conventional fitness equipment has the aforesaid drawbacks and thus has room for improvement.

### SUMMARY OF THE INVENTION

It is a primary objective of the present invention to provide a weight trainer with a load detection system for enabling a user taking fitness exercise to gain insight into the effect thereof in real time and thereby promoting fitness exercise efficiently.

The present invention achieves the above and other objectives and advantages specifically with the features of claim 1. A weight trainer with a load detection system comprises a frame, a load detecting device, and a display device. The frame has a transmission device, a weight allocating device, and a stand. The transmission device is disposed on one side of the frame. The weight allocating device is connected to the transmission device and capable of moving in a vertical direction of the stand. The load detecting device is disposed beneath the weight allocating device. The load detecting device comprises a sensor, a base and a platform. The sensor is abuttingly disposed between the base and the platform. The display device is electrically connected to the load detecting device.

Accordingly, the present invention is effective in detecting a weight change precisely, enabling a user taking fitness exercise to gain access to information thereof in real time, quantifying the information, and thereby promoting fitness exercise efficiently.

The details of structure, features, assembly, and use of a weight trainer with a load detection system of the present invention are described below. However, persons skilled in the art should understand that the detailed description and specific embodiments for explaining the implementation of the present invention are illustrative of the present invention rather than restrictive of the claims of the present invention.

### BRIEF DESCRIPTION OF THE DRAWINGS

Objectives, features, and advantages of the present invention are hereunder illustrated with specific embodiments in conjunction with the accompanying drawings, in which:
FIG. 1 is a perspective view of a weight trainer with a load detection system according to a preferred embodiment of the present invention;
FIG. 2 is a schematic view of a portion of the weight trainer with a load detection system according to the preferred embodiment of the present invention, showing the weight allocating device which has not yet been pulled up;
FIG. 3 is a front view of a portion of the weight trainer with a load detection system according to the preferred embodiment of the present invention, showing that the selection tabs have been pulled up in part;
FIG. 4 is a perspective view of a load detecting device according to the preferred embodiment of the present invention;
FIG. 5 is an exploded view of the load detecting device according to the preferred embodiment of the present invention;
FIG. 6 is a cross-sectional view of the load detecting device according to the preferred embodiment of the present invention, showing relative positions of constituent elements;
FIG. 7 is a flow chart of a detection method for use with the load detecting device according to the preferred embodiment of the present invention;

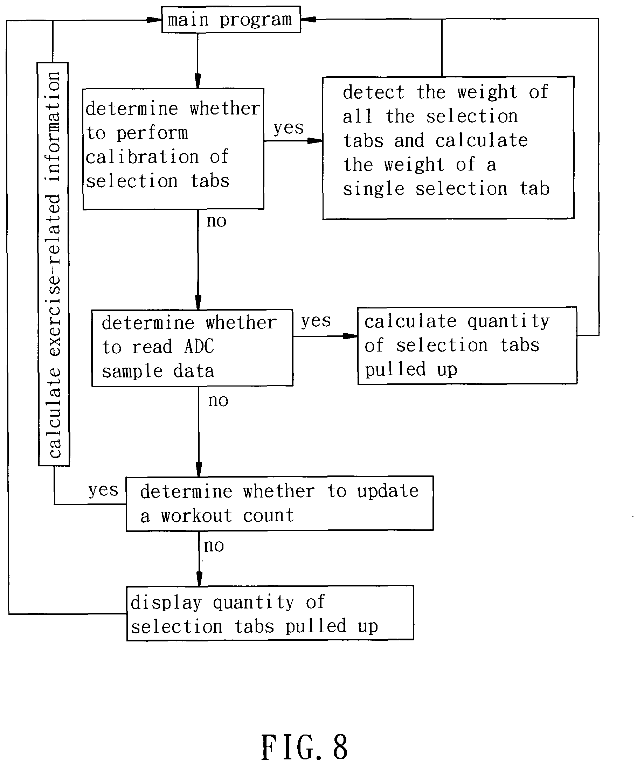

FIG. 8 is a flow chart of the detection method for use with the load detecting device according to the preferred embodiment of the present invention, illustrating the process flow of updating a workout count;
FIG. 9 is a circuit block diagram according to the preferred embodiment of the present invention; and

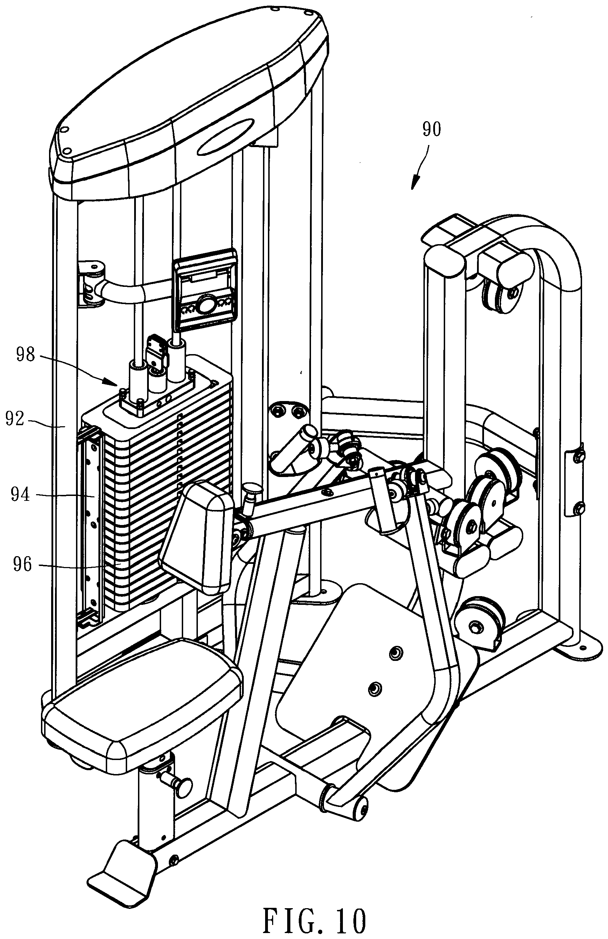

FIG. 10 (PRIOR ART) is a schematic view of a conventional fitness equipment.

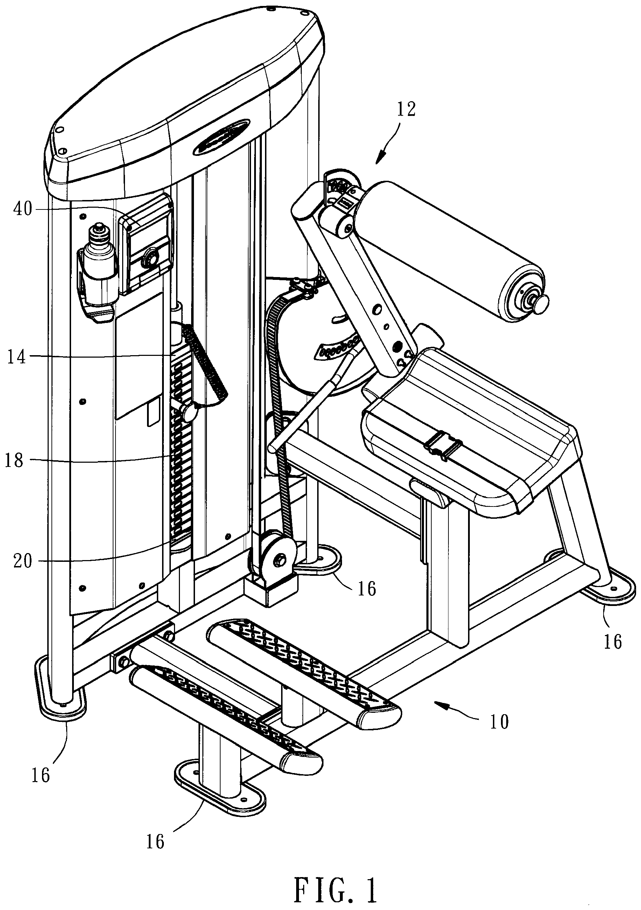

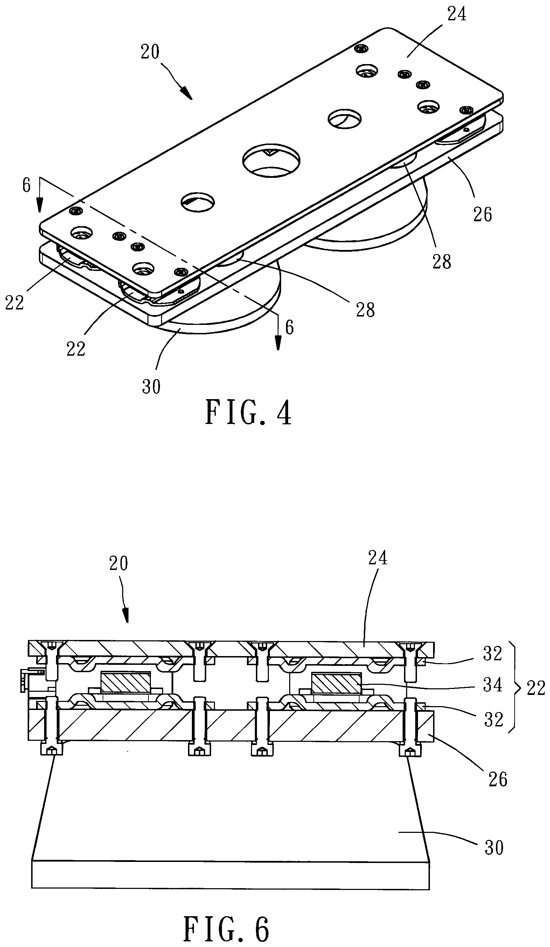

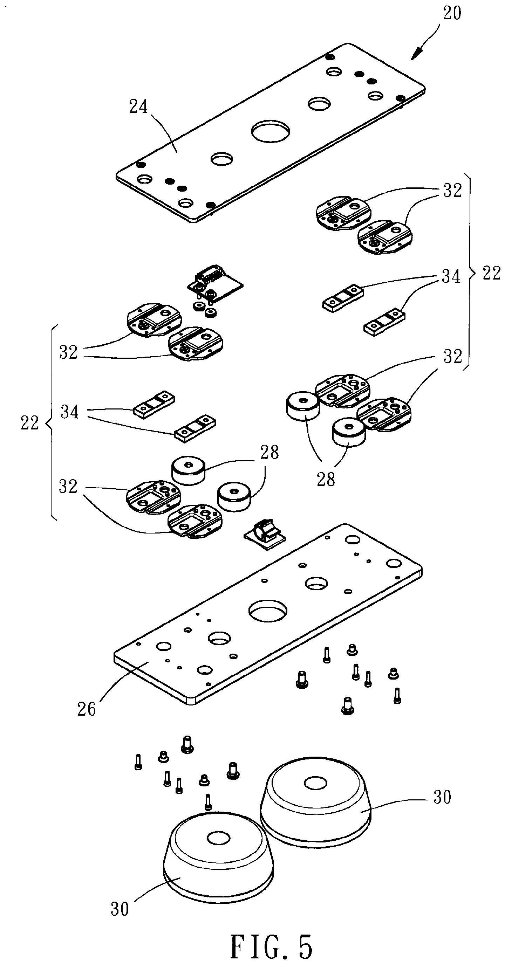

Referring to FIG. 1 through FIG. 6, in a preferred embodiment of the present invention, a weight trainer with a load detection system comprises a frame 10, a load detecting device 20, and a display device 40.

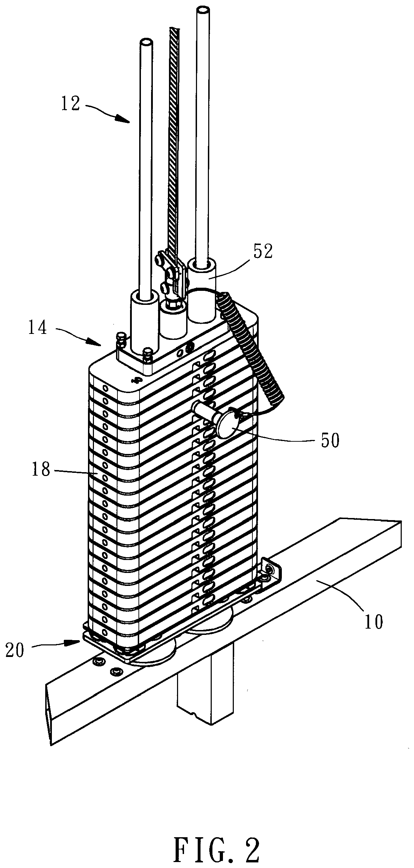

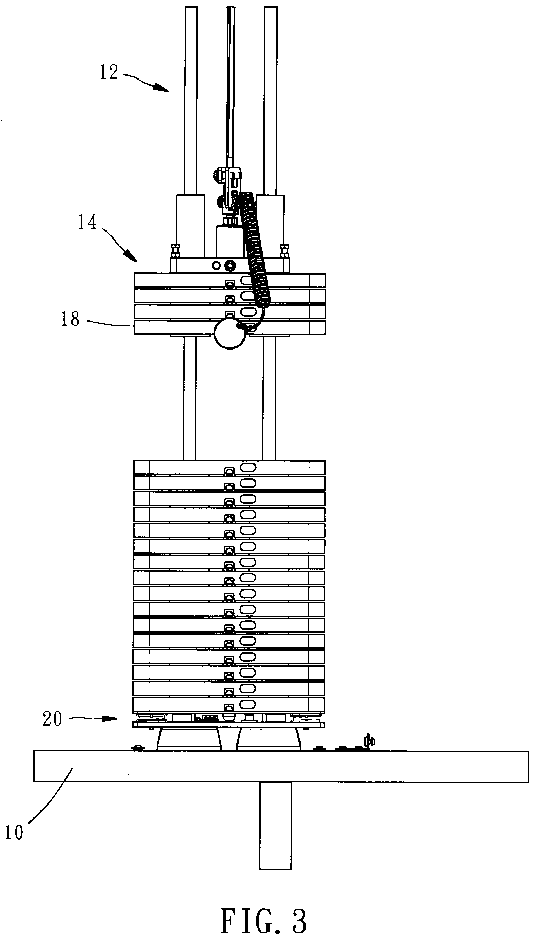

The frame 10 has a transmission device 12, a weight allocating device 14, and a stand 16. The transmission device 12 is disposed on one side of the frame 10 to perform an action in a specific direction under a force applied by a human body. In this embodiment, the weight allocating device 14 comprises a plurality of selection tabs 18 and is connected to the transmission device 12. The selection tabs 18 can be moved in part or in whole according to a user's choice and undergo displacement in the vertical direction of the stand 16. In this embodiment, the weight allocating device 14 comprises the plurality of selection tabs 18, whereas the stand 16 lies on the floor horizontally. Referring to FIG. 2 and FIG. 3, a weight-bearing amount of the selection tabs 18 is selected by means of a pin 50, such that the weight allocating device 14 is driven to move as soon as the transmission device 12 undergoes displacement, Accordingly, the present invention enables the user to perform strenuous workout designed for muscle training.

The load detecting device 20 is disposed beneath the weight allocating device 14. The load detecting device 20 comprises a sensor 22, a base 24, a platform 26, a first buffer pad 28, and a second buffer pad 30. The sensor 22 is abuttingly disposed between the base 24 and the platform 26. The sensor 22 comprises at least a supporting element 32 and a sensing element 34 abutting against the at least a supporting element 32. The sensing element 34 is a pressure-gradient sensing element. The first buffer pad 28 is disposed between the base 24 and the platform 26 of the load detecting device 20. The second buffer pad 30 is disposed beneath the load detecting device 20.

The display device 40 is disposed at a point on the frame 10, for example, the point on the frame 10 is suitable for the user to watch or operate, and the display device 40 is electrically connected to the load detecting device 20, such that training-related information is displayed on the display device 40 so as to be available to the user in real time.

Once the user selects a portion of the selection tabs 18 and exerts a force upon the transmission device 12, the weight allocating device 14 will undergo displacement in the vertical direction of the stand 16 and thus change the quantity of the selection tabs 18 resting on the load detecting device 20. Then, the load detecting device 20 sends a sign pertaining to the weight change to a central processing unit (not shown) of the display device 40 for computation. Accordingly, the load detecting device 20 of the present invention detects a weight change precisely, allows the user taking fitness exercise to gain access to information thereof in real time with the display device 40, and quantifies the information, thereby promoting fitness exercise efficiently.

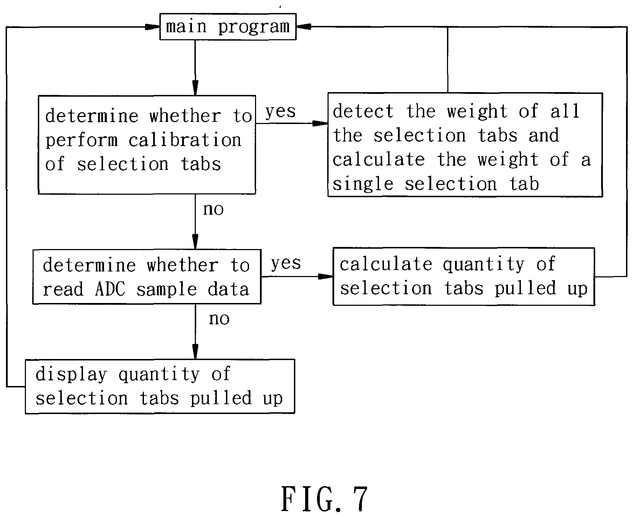

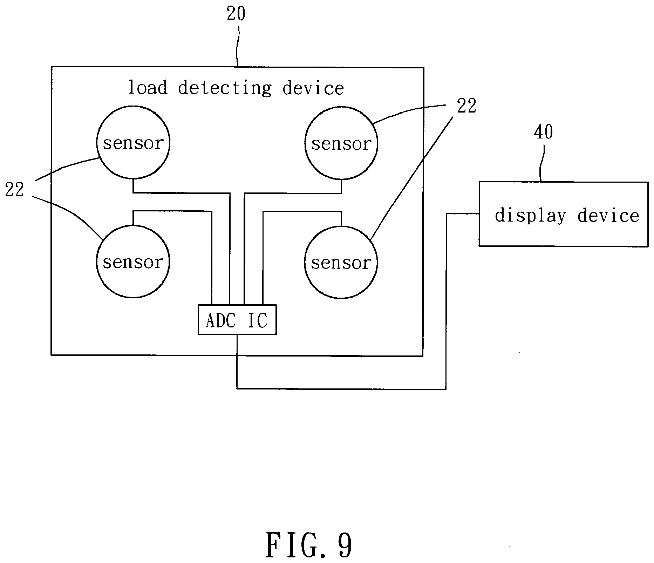

Referring to FIG. 7 and FIG. 9, to further describe an example, not part of the invention, that enables persons skilled in the art to gain insight into the advantages of the weight trainer with a load detection and a detection method that comprises a calibrating step, a detecting step, and a count-updating step as follows:

### 1. Calibrating Step:

a: starting a main program, wherein the user determines whether to perform calibration of the selection tabs 18; if the determination is affirmative, it will be necessary to pull a selection stick 52 up and wait for a 5-second countdown, detect the weight of all the selection tabs 18 with the load detecting device 20, and store data related to the weight of all the selection tabs 18 in the main program; afterward, inserting the pin 50 at a point bisecting the selection tabs 18, pulling the selection stick 52 up and waiting for a 5-second countdown; in doing so, it is feasible to calculate the weight of a single said selection tab 18 and store data pertaining to the weight of a single said selection tab 18 in the main program, and then go back to step a; if the determination is negative, the process flow will go to step b. In this embodiment, the point bisecting the selection tabs 18 is located at the tenth selection tab 18.

### 2. Detecting Step:

b: determining by the main program as to whether to read sample data of the load detecting device 20, detecting the weight of all the selection tabs 18 with the load detecting device 20 and calculating quantity of the selection tabs 18 pulled up before going back to step a when the determination is affirmative, and going to step c when the determination is negative.

c: displaying the quantity of the selection tabs 18 pulled up on the display device 40, wherein the display device 40 displays information about calorie consumption during fitness exercise, duration of a workout, and quantity of workouts.

### 3. Count-updating Step:

d: if, during a workout, a workout condition changes, for example, when the user takes a break or changes the quantity of the selection tabs 18, the main program will instantly determine whether to update a workout count, wherein updated workout-related information is calculated and the process flow goes back to step a when the determination is affirmative, and the process flow goes to step c for displaying current workout-related information on the display device 40 when the determination is negative.

Given the aforesaid technical solution and features of the present invention, a weight trainer with a load detection system of the present invention detects a weight change precisely, allows a user taking fitness exercise to gain access to information thereof in real time, and quantifies the information, thereby promoting fitness exercise efficiently.

The above detailed description to be read in conjunction with the accompany drawings is solely intended to describe an embodiment of the technical solution and features of the present invention. Various simple modifications, replacements, or reduction of constituent elements performed, without going against the scope of the present invention, by persons skilled in the art who have gained insight into the technical solution and features of the present invention should fall within the scope of the appended claims.

## Claims

1. A weight trainer with a load detection system, wherein the weight trainer comprises:
a frame (10) having a transmission device (12), a weight allocating device (14), and a stand (16), the transmission device (12) being disposed on a side of the frame (10), and the weight allocating device (14) being connected to the transmission device (12) and capable of moving in a vertical direction of the stand (16);
a load detecting device (20) disposed beneath the weight allocating device (14) and comprising a sensor (22), a base (24), and a platform (26), the sensor (22) being abuttingly disposed between the base (24) and the platform (26); and
a display device (40) electrically connected to the load detecting device (20), **characterised in that**, the load detecting device (20) further comprises a first buffer pad (28) and a second buffer pad (30), the first buffer pad (28) being disposed between the base (24) and the platform (26) of the load detecting device (29), and the second buffer pad (30) being disposed beneath the platform (20);
and **in that** the sensor (22) comprises a supporting element (32) and a pressure-gradient sensing element (34) abutting against the supporting element (32).

2. The weight trainer with a load detection system of claim 1, being **characterized in that** the weight allocating device (14) comprises a plurality of selection tabs (18).

## Patentansprüche

1. Gewichtstrainer mit Lasterfassungs-System, worin der Gewichtstrainer umfasst:
einen Rahmen (10) mit einer Übertragungseinrichtung (12), einer Gewicht-Verteilungseinrichtung (14) und einem Stand (16), worin die Übertragungseinrichtung (12) an einer Seite des Rahmens (10) vorgesehen ist, und worin die Gewichts-Verteilungseinrichtung (14) mit der Übertragungseinrichtung (12) verbunden und in der Lage ist, sich in einer vertikalen Richtung des Stands (16) zu bewegen;
eine Last-Erfassungs-Einrichtung (20), die unter der Gewicht-Verteilungseinrichtung (14) vorgesehen ist und einen Sensor (22), eine Basis (24), und eine Plattform (26) umfasst, worin der Sensor (22) zwischen der Basis (24) und der Plattform (26) aufliegt; und
ein Anzeigegerät (40), das mit der Last-Erfassungseinrichtung (20) elektrisch verbunden ist,
**dadurch gekennzeichnet, dass**
die Last-Erfassungseinrichtung (20) weiter ein erstes Puffer-Pad (28) und ein zweites Puffer-Pad (30) umfasst, worin das erste Puffer-Pad (28) zwischen der Basis (24) und der Plattform (26) der Last-Erfassungseinrichtung (20) vorgesehen ist, und worin das zweite Puffer-Pad (30) unter der Plattform (20) vorgesehen ist;
und dass der Sensor (22) ein Trägerelement (32) und ein Druckgradient-Erfassungs-Element (34), das gegen das Träger-Element aufliegt (32), umfasst.

2. Gewichtstrainer mit Lasterfassungs-System nach Anspruch 1, **dadurch gekennzeichnet, dass** die Gewicht-Verteilungseinrichtung (14) mehrere Auswahl-tabs (18) umfasst.

## Revendications

1. Appareil de musculation doté d'un système de détection de charge, l'appareil de musculation comprenant:
un cadre (10) ayant un dispositif de transmission (12), un dispositif d'attribution de poids (14) et un support (16), le dispositif de transmission (12) étant disposé sur un côté du cadre (10), et le dispositif d'attribution de poids (14) étant relié au dispositif de transmission (12) et apte à se déplacer dans une direction verticale du support (16),
un dispositif de détection de charge (20) disposé en dessous du dispositif d'attribution de poids (14) et comprenant un capteur (22), une base (24), et une plateforme (26), le capteur (22) étant disposé en butée entre la base (24) et la plateforme (26); et
un dispositif d'affichage (40) connecté électriquement au dispositif de détection de charge (20), **caractérisé en ce que**, le dispositif de détection de charge (20) comprend en outre un premier tampon (28) et un second tampon (30), le premier tampon (28) étant disposé entre la base (24) et la plateforme (26) du dispositif de détection de charge (29), et le second tampon (30) étant disposé sous la plateforme (20);
et **en ce que** le capteur (22) comprend un élément de support (32) et un élément de détection de gradient de pression (34) venant en butée contre l'élément de support (32).

2. Appareil de musculation doté d'un système de détection de charge selon la revendication 1, étant **caractérisé en ce que** le dispositif d'attribution de poids (14) comprend une pluralité de pattes de sélection (18).
